# EUROPÄISCHE PATENTSCHRIFT

(11) **EP 1 730 494 B1**
(45) Veröffentlichungstag und Bekanntmachung des Hinweises auf die Patenterteilung: **20.05.2009**
(21) Anmeldenummer: 05730028.7
(22) Anmeldetag: 18.03.2005
(51) Int. Cl.: G01N 21/25

(54) **VERFAHREN UND VORRICHTUNG ZUR ERFASSUNG VON PROZESSPARAMETERN VON REAKTIONSFLÜSSIGKEITEN IN MEHREREN GESCHÜTTELTEN MIKROREAKTOREN**
METHOD AND DEVICE FOR RECORDING PROCESS PARAMETERS OF REACTION FLUIDS IN SEVERAL AGITATED MICROREACTORS
PROCEDE ET DISPOSITIF PERMETTANT D'ENREGISTRER DES PARAMETRES DE PROCESSUS DE LIQUIDES REACTIONNELS DANS PLUSIEURS MICROREACTEURS AGITES

(30) Priorität: 02.04.2004 DE 102004017039
(43) Veröffentlichungstag der Anmeldung: 13.12.2006
(73) Patentinhaber: RWTH Aachen, 52062 Aachen (DE)
(72) Erfinder: BÜCHS, Jochen, 52074 Aachen (DE); KENSY, Frank, 52064 Aachen (DE); SAMORSKI, Markus, 40217 Düsseldorf (DE)
(74) Vertreter: Kohlmann, Kai
(86) Internationale Anmeldenummer: PCT/EP2005/002928
(87) Internationale Veröffentlichungsnummer: WO 2005/098397

(56) Entgegenhaltungen:
- EP-A- 0 448 923
- EP-A- 0 677 732
- WO-A-92/10754
- US-A- 5 325 295
- US-A- 5 595 708
- JOHN GERNOT T ET AL: "Integrated optical sensing of dissolved oxygen in microtiter plates: A novel tool for microbial cultivation." BIOTECHNOLOGY AND BIOENGINEERING, Bd. 81, Nr. 7, 30. März 2003 (2003-03-30), Seiten 829-836, XP002334114 ISSN: 0006-3592
- HERMANN R ET AL: "OPTICAL METHOD FOR THE DETERMINATION OF THE OXYGEN-TRANSFER CAPACITY OF SMALL BIOREACTORS BASED ON SULFITE OXIDATION" BIOTECHNOLOGY AND BIOENGINEERING. INCLUDING: SYMPOSIUM BIOTECHNOLOGY IN ENERGY PRODUCTION AND CONSERVATION, JOHN WILEY & SONS. NEW YORK, US, Bd. 74, Nr. 5, 5. September 2001 (2001-09-05), Seiten 355-363, XP001078069 ISSN: 0006-3592

## Beschreibung

Die Erfindung betrifft ein Verfahren und eine Vorrichtung zur Erfassung von Prozessparametern von Reaktionsflüssigkeiten in mehreren Mikroreaktoren, die zumindest bis zur Beendigung der Reaktion in sämtlichen Mikroreaktoren kontinuierlich geschüttelt werden, wobei die Prozessparameter in den Mikroreaktoren während der Reaktion mit Hilfe mindestens einer Sensoroptik erfasst werden, die elektromagnetische Strahlung von einer Strahlungsquelle in die Reaktionsflüssigkeit eines Mikroreaktors einleitet sowie von der Reaktionsflüssigkeit des Mikroreaktors ausgehende elektromagnetische Strahlung mit einem der Strahlungsquelle zugeordneten Sensor erfasst.

Die Erfindung eignet sich insbesondere zur automatisierten Erfassung von Prozessparametern mikrobieller, biochemischer, enzymatischer und chemischer Reaktionen in Reaktionsflüssigkeiten, die bis zum Abschluss der Reaktion in sämtlichen Mikroreaktoren unterbrechungslos geschüttelt werden.

Als Parameter der Reaktionsflüssigkeiten können beispielsweise die Biomasse-, Substrat-, Produkt- und Nebenproduktkonzentrationen, Eigenfluoreszenz von Zellen, Fluoreszenz von fluoreszierenden Proteinen oder Aminosäuren, pH-,T-, pO₂- und pCO₂-Werte, die Sauerstofftransferrate (OTR) und die Kohlendioxidtransferrate (CTR) erfasst werden.

Insbesondere sollen die vorgenannten Parameter in Mikroreaktoren mit einer Größe von 10µl-5ml bestimmt werden, um den Aufwand für chemische, biochemische, enzymatische und mikrobielle Optimierungsverfahren, auch als Screening bezeichnet, zu reduzieren. Ein Screening kommt beispielsweise bei der Stammselektion, Medienoptimierung und Optimierung der Prozessführung in Betracht. Die geringen Volumina in den Mikroreaktoren ermöglichen die geforderten hohen Durchsätze in vielen Bereichen der Forschung und Entwicklung, wie insbesondere in der kombinatorischen Chemie und der molekularen Biotechnologie.

Aus dem Stand der Technik sind sogenannte Mikrotiterplatten-Lesegeräte zur Erfassung der Absorption und Fluoreszenz in mikrobiellen Reaktionsflüssigkeiten bekannt. Die Schüttelbewegung der Mikrotiterplatten muss für jede Erfassung von Prozessparametern während der Reaktion unterbrochen werden. Je mehr Prozessparameter über die ablaufenden Reaktionen gewonnen werden sollen, desto häufiger muss die Schüttelbewegung unterbrochen werden, wodurch die Misch- und Stofftransportvorgänge gestört werden. Dadurch kann es bei Kulturen zu anaeroben Bedingungen kommen, die die verschiedenen Mikroorganismen mehr oder minder stark schädigen. Ein derartiges Absorptions-Mikrotiterplatten-Lesegerät für 200-Well Mikrotiterplatten zur Überwachung des mikrobiellen Wachstums wird beispielsweise von der Firma Thermo Electron Corporation, Waltham, MA, USA angeboten. Erfasst wird die Licht-Absorption durch die in den Wells befindlichen Zellen. Hierzu wird elektromagnetische Strahlung von einer Strahlungsquelle in die Reaktionsflüssigkeit in den Wells eingeleitet und die von der Reaktionsflüssigkeit des Mikroreaktors ausgehende elektromagnetische Strahlung mit einem Sensor erfasst. Die Sensorsignale hängen von der durchstrahlten Schichtdicke und der Zellkonzentration ab.

Aus der US 6,673,532 B2 ist darüber hinaus bereits ein Mikrotiterplatten-Lesegerät zur Erfassung der Absorption in mikrobiellen Kulturflüssigkeiten bekannt, bei dem die Schüttelbewegung der Mikrotiterplatten für die Erfassung der Absorption während der Reaktion nicht unterbrochen werden muss. Die bekannte Vorrichtung besteht beispielsweise aus einer 96 Wells aufweisenden Mikrotiterplatte, die von einer Mikroreaktor-Plattform aufgenommen wird. Die einzelnen Wells weisen ein Volumen zwischen 100 µl und 250 µl auf. In einer unter der Mikroreaktorplattform angeordneten Sub-Plattform befindet sich mindestens eine Sensoroptik mit einer Anregungs-Quelle, beispielsweise einer Leuchtdiode, sowie einem Detektor, der die Absorption der elektromagnetischen Strahlung der Anregungsquelle in der Reaktionsflüssigkeit des Mikroreaktors (Wells) erfasst. Die Änderung der gemessenen Absorption indiziert eine Änderung der Konzentration des Analyten in dem Mikroreaktor. In einer Ausgestaltung des Lesegeräts ist es vorgesehen, dass die LED's und die Detektoren mittels eines Robotters von Mikroreaktor zu Mikroreaktor bewegt werden. In einer anderen Ausgestaltung ist es vorgesehen, dass jedem Mikroreaktor mindestens eine LED und ein Detektor innerhalb der Subplattform zugeordnet ist. Die Subplattform mit der bzw. den Sensoroptiken befindet sich wiederum auf einer Schüttelvorrichtung, die auf einem Positioniertisch befestigt ist. Die Schüttelvorrichtung ist eine Spezialanfertigung, um deren Integration zwischen dem Positioniertisch und der Subplattform zu ermöglichen. Der in XY-Achsrichtung verfahrbare Positioniertisch dient dem Zweck, einzelne Mikroreaktoren unter einen Dispenser zu verfahren. Mit dieser bekannten Vorrichtung lassen sich beispielsweise die Wachstumsbedingungen der Mikroorganismen in Kulturflüssigkeiten aussagekräftig beurteilen, da die durch eine Unterbrechung der Schüttelbewegung auftretenden Probleme vermieden werden.

Nachteilig ist jedoch der aufwendige Aufbau der Vorrichtung, insbesondere der des speziell auf die Vorrichtung abgestimmten Schüttlers. Nachteilig ist weiter, dass die Sensoroptik(en) in der Sub-Plattform mit geschüttelt werden. Aufgrund der hohen Schüttelfrequenzen und damit verbundenen Fliehkräften kann es zu Problemen und damit Fehlern bei der Erfassung der Prozessparameter kommen, die unter Umständen eine Wiederholung der Reaktion erforderlich machen. Hierdurch kann es zu unerwünschten Verzögerungen, insbesondere bei Reihenuntersuchungen mikrobieller Kulturflüssigkeiten, enzymatischer und chemischer Reaktionen kommen.

Ferner ist es aus der WO 92/10754 A bereits bekannt, Flüssigkeiten in Mikrotiterplatten während des Schüttelns zu analysieren. Diese Analyse erfolgt mit Videokameras, Fotodioden oder einer Scaneinrichtung.

Schließlich ist aus der US-A 5,595, 708 eine Sensoroptik zum seriellen Testen einer Vielzahl von Reaktoren bekannt, die in mehreren Kippgestellen angeordnet sind. Die Sensoroptik ist an einer XY-Positioniereinheit angeordnet, die nacheinander die einzelnen Reaktoren anfährt. Die Signale der Sensoroptik werden in einer digitalen Auswerteinheit weiterverarbeitet. Die Kippbewegung der Reaktoren wird während der Messungen unterbrochen.

Ausgehend von diesem Stand der Technik liegt der Erfindung die Aufgabe zugrunde, ein Verfahren zur Erfassung von Prozessparametern von Reaktionsflüssigkeiten in mehreren während der Reaktion kontinuierlich geschüttelten Mikroreaktoren anzugeben, das zuverlässig arbeitet, insbesondere Probleme und damit Fehler bei der Erfassung der Prozessparameter vermeidet sowie eine Abdeckung der Mikroreaktoren während des Betriebs ermöglicht. Des Weiteren soll eine Vorrichtung zur Durchführung des Verfahrens angegeben werden, die weitgehend mit Standard-Bauteilen und Vorrichtungen der Biotechnologie realisiert werden kann.

Diese Aufgabe wird mit einem Verfahren mit den Merkmalen der unabhängigen Ansprüche 1, 2, 4 sowie der Vorrichtungen mit den Merkmalen der unabhängigen Ansprüche 12 und 13 gelöst.

Die Vorteile und Wirkungen der verschiedenen Lösungen ergeben sich aus der nachfolgenden Beschreibung.

Sämtliche Lösungen umfassen die Merkmale, dass
- jede unter den Mikroreaktoren der Mikrotiterplatte ausgerichtete Sensoroptik zumindest während der Erfassung der Prozessparameter nicht bewegt wird, so dass die geschüttelten Mikroreaktoren sich relativ zu jeder Sensoroptik bewegen und
- die von jeder Sensoroptik ausgehende elektromagnetische Strahlung während der Erfassung der Prozessparameter in einem der Mikroreaktoren ausschließlich in diesen Mikroreaktor eingeleitet wird und die von der Reaktionsflüssigkeit ausgehende Strahlung ausschließlich auf den Sensor der Sensoroptik trifft.

Diese Merkmale beruhen auf der Erkenntnis, dass eine kontinuierliche Erfassung der Prozessparameter auch dann möglich ist, wenn jede an einer Positioniereinheit angeordnete Sensoroptik während der Erfassung der Werte eines Prozessparameters, zum Beispiel bei der Erfassung eines momentanen Wertes der Eigenfluoreszenz während der andauernden Reaktion, nicht bewegt wird. Die dabei auftretende Relativbewegung zwischen den geschüttelten Mikroreaktoren und jeder Sensoroptik ist unproblematisch solange gewährleistet ist, dass die elektromagnetische Strahlung jeder Sensoroptik während der Erfassung der Prozessparameter in einem der Mikroreaktoren ausschließlich in diesen Mikroreaktor eingeleitet wird und die von der Reaktionsflüssigkeit ausgehende Strahlung ausschließlich auf den Sensor der zugehörigen Sensoroptik trifft.

Die Biomassekonzentration in einem der Mikroreaktoren kann beispielsweise mit Hilfe von auf den Sensor der Sensoroptik treffendes Streulicht oder die von der Eigenfluoreszenz der Zellen ausgehende Strahlung erfasst werden.

Die Substrat-, Produkt- und Nebenproduktkonzentration kann mit Hilfe der IR- oder Ramanspektroskopie verfolgt werden. Biotechnologische Substrate wie z.B. Glucose oder Glycerin sind IR- und Ramanaktiv und bilden ein spezifisches Spektrum aus, was auch in sehr komplexen Medien detektiert werden kann. Stoffwechselnebenprodukte wie Essigsäure und Ethanol besitzen ebenfalls ein charakteristisches Spektrum. Durch Übertragung des Spektrums über Lichtwellenleiter an ein IR- oder Raman-Spektrometers können organische Substrate in den Mikroreaktoren detektiert werden. Detailliertere Ausführungen sind unter Sivakesava S., Irudayaraj J., Ali D. (2001): Simultaneous determination of multiple components in lactic acid fermentation using FT-MIR, NIR, and FT-Raman spectroscopic techniques, Process Biochemistry 37, 371-378, zu finden.

In vorteilhafter Ausgestaltung der Erfindung weisen die Reaktionsflüssigkeiten in den Mikroreaktoren wenigstens ein chemisches Sensormaterial, wie insbesondere einen Fluoreszenz-Farbstoff auf, der insbesondere an wenigstens einer Innenwand des Mikroreaktors immobilisiert sein kann. Fluoreszenz-Farbstoffe reagieren spezifisch auf ihre Umgebungsbedingungen. Beispielsweise reagieren Platinporphyrine oder Ruthenium-Komplexe auf die Anwesenheit von Sauerstoff mit der Löschung ihrer Fluoreszenz-Eigenschaften. Ebenso reagieren Fluoreszenz-Indikatorlösungen empfindlich auf Veränderungen der gelöst CO₂-Konzentration (pCO₂) und des pH-Wertes, indem sie die Fluoreszenz-Eigenschaften verändern. Immobilisiert man diese Substanzen in einer porösen Polymermatrix oder löst oder suspendiert man diese in der Reaktionsflüssigkeit, so wirken sie als optische Sensoren (auch Optoden genannt) für pH-, T-, pO₂-, pCO₂-Werte (Liebsch (2000): Time Resolved Luminescence Lifetime Imaging with Optical Chemical Sensors, Dissertation an der Uni Regensburg). Es können jedoch auch normale gelöste pH-Indikatoren eingesetzt werden.

Nachfolgend wird die Erfindung anhand der Figuren näher erläutert. Es zeigen:
- Abb. 1 A-C: Drei Varianten von bevorzugten Vorrichtungen zur Durchführung des erfindungsgemäßen Verfahrens;
- Abb. 2 A-C: Verschiedene Ausführungsformen einer Sensoroptik für die erfindungsgemäße Vorrichtung;
- Abb.3 A-B: zwei schematische Draufsichten auf einen zylindrischen Mikroreaktor, der mit einem festen Schütteldurchmesser über einen Lichtstrahl einer Blitzlampe rotiert;
- Abb. 4: eine Darstellung zur Erläuterung einer ersten Variante des erfindungsgemäßen Verfahrens;
- Abb. 5: eine Darstellung zur Erläuterung einer zweiten Variante des erfindungsgemäßen Verfahrens;
- Abb. 6: eine Darstellung zur Erläuterung einer dritten Variante des erfindungsgemäßen Verfahrens unter Verwendung chemischer Sensoren sowie
- Abb.7: Messkurven einer Kultur von Hansenula polymorpha

Ein Mikrotiterplatte (1) mit einem Array von Mikroreaktoren wird in eine Aufnahme eines Tablars (4) eines Rotations- Schüttler (5, 6) eingesetzt. Der Rotations-Schüttler (5,6) erreicht eine maximale Schüttelfrequenz von beispielsweise 500-2000 Upm. Der Schütteldurchmesser des RotationsSchüttlers ist auf das Erfassungsverfahren abgestimmt.

Über eine Sensoroptik (17) wird elektromagnetische Strahlung mit einer Wellenlänge von 200nm-25µm durch den Ausschnitt (11) des Tablars (4) in die für die Strahlung durchlässigen Wells der Mikrotiterplatte (1) eingeleitet und die von den Wells ausgehende Strahlung von der Sensoroptik (17) erfasst.

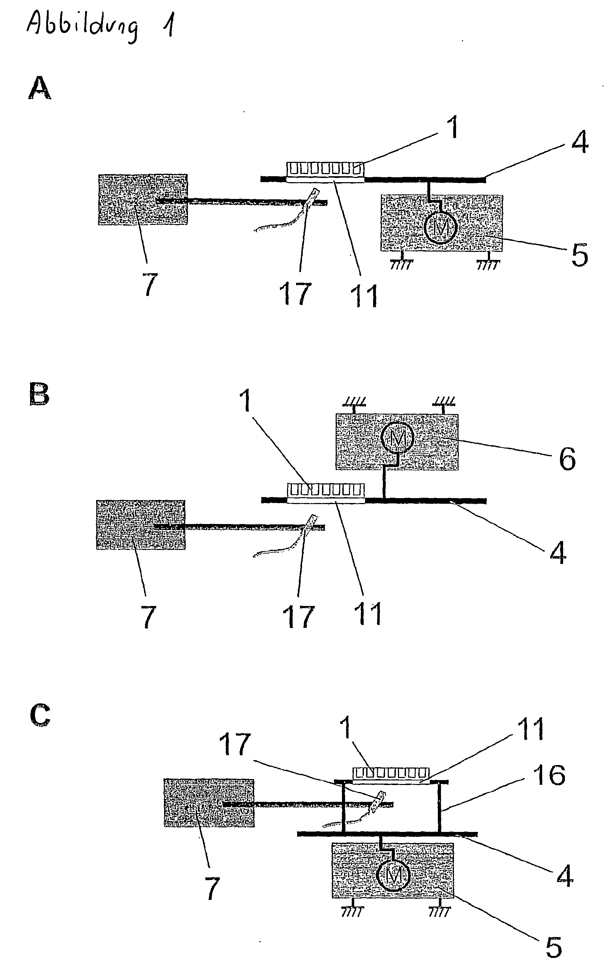

Abbildung 1A zeigt eine Ausführungsform mit einem stehenden Rotationsschüttler (5), bei dem die die Mikrotiterplatte (1) tragende Teilfläche des Tablars (4) über den Antrieb hinaus ragt. Damit wird ein freier Zugang der an einer X/Y-Positioniereinheit (7) angeordneten Sensoroptik (17) zu der Mikrotiterplatte (1) von deren Unterseite gewährleistet.

Abbildung 1 B zeigt eine Ausführungsform mit einem Tablar (4), das von einem hängenden Rotationsschüttler (6) angetrieben wird. Der die Mikrotiterplatte (1) tragende Teil des Tablars (4) braucht bei dieser Ausführungsform nur dann über den Rotationsschüttler (6) hinausragen, wenn die Wells auch von oben zugänglich sein sollen

Abbildung 1 C zeigt eine Ausführungsform bei der die Mikrotiterplatte (1) von einem Schüttelgestell (16) mit einem Ausschnitt (11) aufgenommen wird. Das Schüttelgestell (16) beabstandet die Mikrotiterplatte (1) in vertikaler Richtung von dem ebenen Tablar (4). Aufgrund der seitlich offenen Ausführung des Schüttelgestells (16) kann die Sensoroptik (17) mittels der X/Y-Positioniereinheit (7) ungehindert von der Seite unter jedes Well in der Mikrotiterplatte verfahren werden.

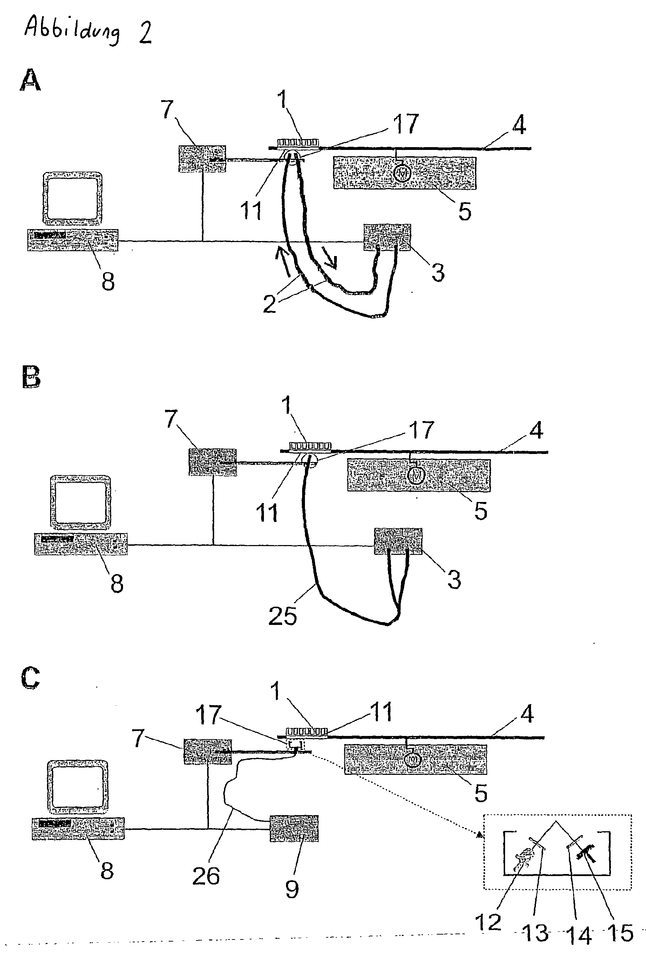

Abbildungen 2A, 2B zeigen Vorrichtungen, bei denen die elektromagnetische Strahlung der Strahlungsquelle und die von den Reaktionsflüssigkeiten ausgehende Strahlung über Lichtwellenleiter (2,25) geführt werden.

Die Variante nach Abbildung 2 A zeigt eine getrennte Strahlungsführung über zwei Lichtwellenleiter (2). Die Einleitung der Strahlung erfolgt über einen zum Reaktor hin führenden Lichtwellenleiter (2) und die Führung der von dem Mikroreaktor ausgehenden Strahlung über einen vom Mikroreaktor wegführenden Lichtwellenleiter (2). In einem Lesegerät (3) befinden sich eine die Sensoroptik speisende Strahlungsquelle und ein Sensor.

Die Variante nach Abbildung 2 B unterscheidet sich von der Variante nach Abbildung 2 A lediglich darin, dass die beiden Lichtwellenleiter (2) in einem Y-Lichtwellenleiter (25) vereint sind. Die Lichtwellenleiter bestehen aus einzelnen Lichtfasern oder aber auch aus Lichtfaserbündeln. In dem Lesegerät (3) befinden sich die die Sensoroptik speisende Strahlungsquelle und der Sensor.

Abbildung 2 C zeigt eine Sensoroptik (17) ohne Lichtwellenleiter. Die Strahlungsquelle (12) und der Sensor (15) befinden sich unmittelbar in der Sensoroptik (17), die zusätzlich Filter (13, 14) im Strahlengang aufweisen kann. Das Anregungslicht der Strahlungsquelle (12) wird direkt auf jeden einzelnen Mikroreaktor ausgerichtet, während die reaktionsabhängige, von der Reaktionsflüssigkeit in dem Mikroreaktor ausgehende Strahlung auf den Sensor (15) trifft. Die Sensoroptik (17) ist über Kabel (26) zur Versorgung der Strahlungsquelle (12) sowie zur Signalübertragung der Sensorsignale mit einer elektronischen Schaltung (9) verbunden. Die Schaltung (9) steuert die Strahlungsquelle (12) und dient dem Auslesen der Sensorsignale. Die Datenerfassung und Auswertung übernimmt in allen Varianten eine Datenverarbeitungseinheit, beispielsweise ein Computer (8). Die Funktionalität der elektronischen Schaltung (9) ist bei den Varianten nach den Abbildungen 2 A, B in das Lesegerät (3) integriert. Die Sensoroptik (17) ist in allen Varianten an dem Arm einer X-Y-Positioniereinheit (7) befestigt. Die Ansteuerung der X-Y- Positioniereinheit (7) erfolgt ebenfalls durch den Computer (8) mit einer Steuer-Software.

Je nach Anforderung an die Messaufgabe ist es möglich elektromagnetische Strahlung mit eng eingegrenztem Wellenlängenbereich, beispielsweise erzeugt über optische Filter (13), Beugungsgitter, Prismen oder direkt durch eine Strahlungsquelle mit definiertem Spektrum, wie einem Laser oder einer LED, einzustrahlen und aus dem abgestrahlten Licht nur bestimmte Wellenlängen dem Sensor zuzuführen. Für diesen Zweck kann das abgestrahlte Licht ebenfalls über optische Filter (14), Beugungsgitter oder Prismen gefiltert werden.

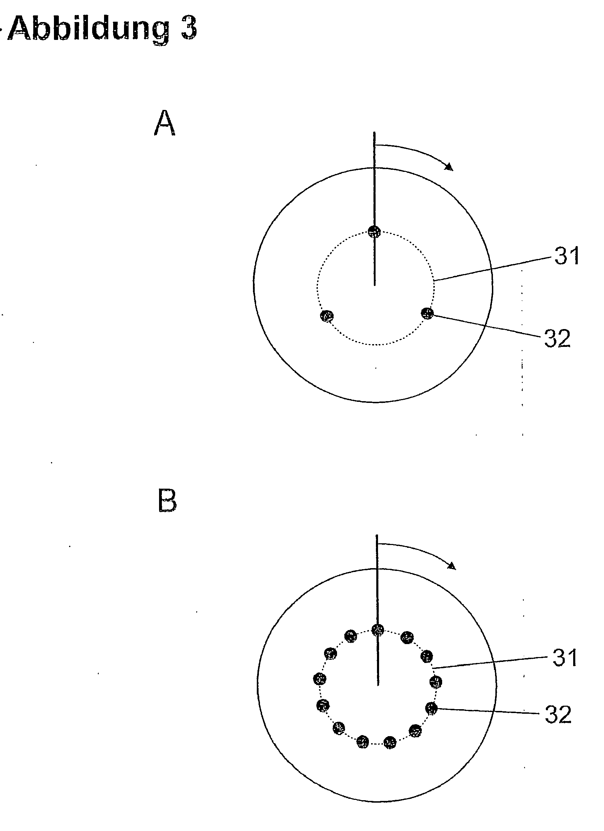

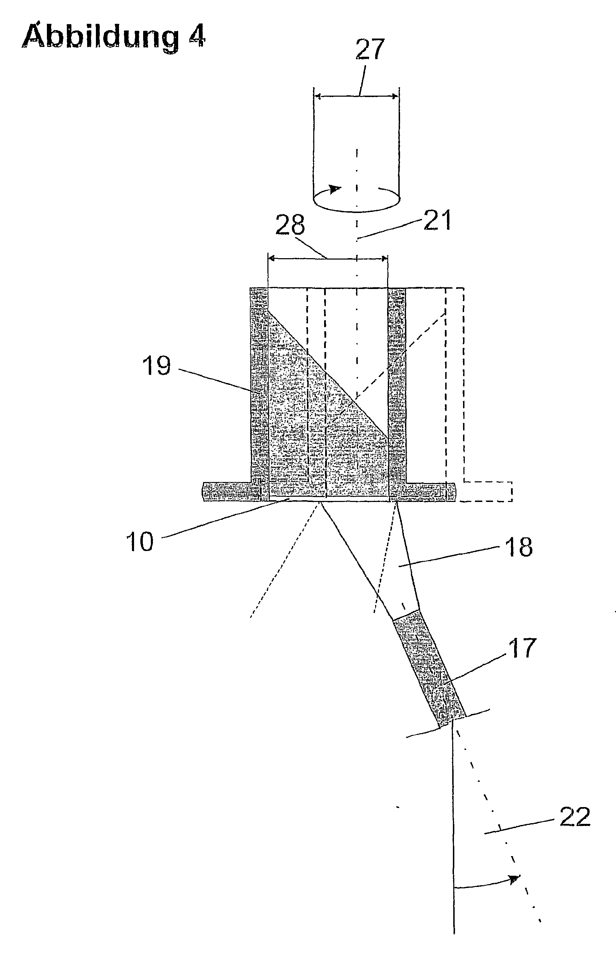

Bei der Verwendung einer Blitzlampe zur Anregung der Analyten in der Reaktionsflüssigkeit eines Mikroreaktors ist es vorteilhaft, wenn die Schütteldrehzahl des Rotationsschüttlers (5,6) und die Pulsfrequenz der Blitzlampe so abgestimmt sind, dass keine Schwebezustände auftreten. Schwebzustände treten auf, wenn die Lichtblitze auf wenigen Positionen des Reaktorbodens auftreffen und die Positionen wegen fehlender Synchronisation von Schüttler- und Blitzfrequenz auf dem Reaktorboden wandern. Der in Abbildung 4 dargestellte, von einem kreiszylindrischen Boden (10) und einem Zylindermantel (19) begrenzte, Mikroreaktor rotiert mit einem festen Schütteldurchmesser über einem ortsfesten Lichtstrahl (18) der Sensoroptik (17). Durch die Rotation des Mikroreaktors beschreibt der Lichtstrahl (18) eine Kreislinie (31) auf dem Boden (10) des Mikroreaktors (s. Abbildungen 3A und 3B).

In Abbildung 3A ist durch die Wahl der Schütteldrehzahl (n) und der Blitzfrequenz (f_{B}) der Blitzlampe ein Zustand dargestellt, bei dem nur 3 Blitze über den Umfang der Kreislinie (31) verteilt sind. Hier ist f_{B} ≃3*n, so dass nur 3 Blitze pro Umdrehung ausgelöst werden. Insbesondere, wenn die Blitzfrequenz (f_{B}) ein natürliches Vielfaches der Schütteldrehzahl (n) ist, treten Schwebezustände auf. Dabei setzen die Lichtblitze zunächst an den gleichen Positionen (32) auf der Kreislinie (31) ein. Bei zu geringer Abdeckung der Kreislinie (31) mit Blitzen (<4 Blitze/Kreislinie) und nicht synchronisiertem Blitzeinsatz mit der Flüssigkeitsbewegung im Reaktor wandern die Positionen (32) im Uhrzeigersinn oder Gegenuhrzeigersinn auf der Kreislinie (31). Dadurch kommt es auf Grund des Winkels (22) der Sensoroptik (17) zu veränderlichen Intensitäten der vom Mikroreaktor ausgestrahlten elektromagnetischen Strahlung und es kann daher zu unvorteilhaften Schwingungen des Mess-Signals kommen.

Zur Vermeidung von Schwebezuständen ist daher eine größere Zahl von Lichtblitzen anzustreben, die gleichmäßig über die Kreislinie (31) verteilt sind. Dies lässt sich erreichen, wenn f_{B} = N*n (mit N= natürliche Zahl) erfüllt ist. In Abbildung 3B ist hierfür ein Beispiel dargestellt. Über den Umfang der Kreislinie (31) sind 13 Lichtblitze abgebildet. Die Lichtblitze können bei einer, jedoch auch bei mehreren Umdrehungen des Rotationsschüttlers abgestrahlt werden. Durch die Beziehung n=f_{B}*P/U (mit P= Anzahl der Blitze auf der Kreislinie und U= Anzahl der Umdrehungen bis P erreicht wird) werden die Betriebsbedingungen so eingestellt, dass möglichst eine hohe Anzahl von Blitzen (P > 10) über den Umfang der Kreislinie verteilt wird. Somit lässt sich ein stabiles und homogenes Sensorsignal zur Erfassung der Prozessparameter in dem Mikroreaktor gewinnen.

Eine weitere Möglichkeit das Sensorsignal zu stabilisieren besteht darin, die Blitze der Strahlungsquelle mit dem Schüttelantrieb und damit auch der Flüssigkeitsbewegung in den Mikroreaktoren zu synchronisieren. Mit Hilfe eines Positionsgebers (z.B. einer Lichtschranke, eines Beschleunigungssensors oder eines Hallsensors) kann zu jeder Zeit die Position des Tablars (4) zur Sensoroptik (17) bestimmt werden. Unter Berücksichtigung der Positionsinformation werden die Lichtblitze der Blitzlampe ausgelöst. Der Blitz wird vorzugsweise dann ausgelöst, wenn die in Zentrifugalbeschleunigungsrichtung schwappende Reaktionsflüssigkeit sich oberhalb der Sensoroptik (17) befindet. Hierdurch wird verhindert, dass der Lichtstrahl (18) in Zonen des Mikroreaktors fällt, in denen sich zeitweilig aufgrund der Zentrifugalbeschleunigung keine oder sehr wenig Reaktionsflüssigkeit befindet.

Nachfolgend wird das erfindungsgemäße Verfahren zur Erfassung der Prozessparameter von Reaktionsflüssigkeiten in zwei unterschiedlichen Varianten mit einer Vorrichtung nach Abb. 2 näher erläutert.

Abbildung 4 illustriert ein Verfahren zur aufeinanderfolgenden Erfassung der Werte von Prozessparametern in jeweils lediglich einem Mikroreaktor mit anschließendem Verfahren der Sensoroptik (17) mittels der Positioniereinheit (7).

Die Sensoroptik (17) wird unter einem Mikroreaktor derart ausgerichtet, dass die elektromagnetische Strahlung mit einer Wellenlänge zwischen 200nm-25µm in Form des Lichtstrahls (18) bei der Erfassung einzelner Messwerte während der Reaktion ausschließlich in diesen Mikroreaktor eingeleitet wird. Bei Verwendung eines zylindrischen Mikroreaktors mit kreiszylindrischem Boden (10) wird der Schütteldurchmesser (27) des Rotationsschüttlers (5 oder 6) um die Exzenter-Achse (21) (siehe Abb. 4) so gewählt, dass der Lichtstrahl (18) der Sensoroptik (17) nur auf den Boden (10) eines der Mikroreaktoren auftrifft. Dazu muss der Schütteldurchmesser (27) kleiner oder gleich dem Durchmesser (28) des Bodens (10) gewählt werden.

Zur Beschleunigung der Erfassung ist es bei schnell ablaufenden Reaktionen möglich, Gruppen von Mikroreaktoren eines Mikroreaktorarrays zusammenzufassen, wobei die Prozessparameter der einzelnen Gruppen nacheinander erfasst werden, jedoch die Prozessparameter in den Mikroreaktoren einer Gruppe gleichzeitig von einer Sensoroptik (17) für jeden Mikroreaktor der Gruppe erfasst werden. Die Sensoroptiken zur gleichzeitigen Erfassung innerhalb einer Gruppe sind an der Positioniereinheit (7) angeordnet. Nach der gleichzeitigen Erfassung der Prozessparameter in den Mikroreaktoren einer Gruppe werden die Sensoroptiken zur nächsten Gruppe verfahren. Die Sensoroptiken für eine Gruppe werden unter den Mikroreaktoren der Gruppe derart ausgerichtet, dass die elektromagnetische Strahlung jeder Sensoroptik bei der Erfassung einzelner Messwerte ausschließlich in den Mikroreaktor eingeleitet wird, unter dem sich die Sensoroptik gerade befindet.

Um Signalüberflutung des Sensors, beispielsweise eines Photodetektors, durch Lichtreflexionen des Anregungslichts am Boden (10) zu vermeiden, wird jede Sensoroptik derart zu jedem Mikroreaktor ausgerichtet, dass keine von den Wänden, insbesondere dem Boden (10) des Mikroreaktors reflektierte elektromagnetische Strahlung auf den Sensor trifft. Zu diesem Zweck wird das als Sensoroptik (17) dienende Lichtwellenleiterende in einem spitzen Winkel (22) zur einer Orthogonalen auf dem Boden (10) des Mikroreaktors angestellt. Abhängig von der Numerischen Appertur des Lichtwellenleiters ergeben sich unterschiedliche optimale Anstellwinkel (22), die vorzugsweise zwischen 25° bis 40° liegen.

Anstelle der aufeinanderfolgenden Erfassung der Prozessparameter ist es jedoch auch möglich, die Prozessparameter in sämtlichen Mikroreaktoren gleichzeitig von einer Sensoroptik für jeden Mikroreaktor zu erfassen. Die Sensoroptiken werden unter den Mikroreaktoren derart ausgerichtet, dass die elektromagnetische Strahlung (200nm-25µm) in Form des Lichtstrahls (18) bei der Erfassung der Messwerte während der Reaktion ausschließlich in den der Sensoroptik zugeordneten Mikroreaktor eingeleitet wird.

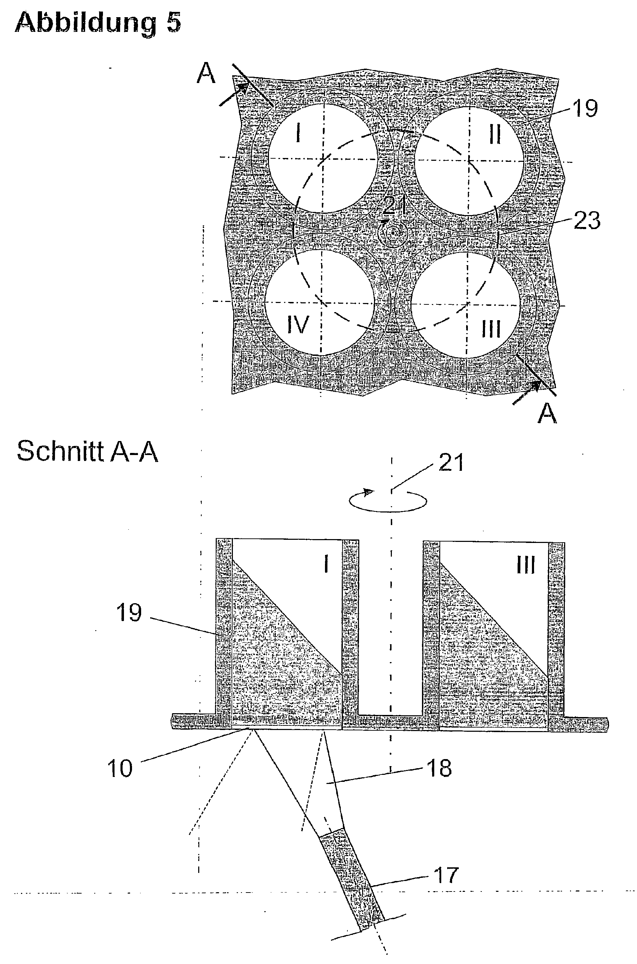

Abbildung 5 illustriert ein Verfahren zur aufeinanderfolgenden Erfassung der Prozessparameter in vier benachbart zueinander angeordneten Mikroreaktoren. Die Prozessparameter der Mikroreaktoren werden aufgrund der kreisförmigen Relativbewegung zu der nicht bewegten Sensoroptik (17) nacheinander von dieser Sensoroptik (17) erfasst. Die elektromagnetische Strahlung der Sensoroptik (17) wird während der Erfassung der Prozessparameter in einem der vier Mikroreaktoren ausschließlich in diesen Mikroreaktor eingeleitet. Die von der Reaktionsflüssigkeit ausgehende Strahlung trifft ausschließlich auf den Sensor der Sensoroptik (17). Eine gleichzeitige Einstrahlung in zwei benachbarte Mikroreaktoren wird aufgrund der Anordnung der Sensoroptik (17) zum Boden (10) der Mikroreaktoren vermieden.

Die Sensoroptik (17) ist auf einen der vier Mikroreaktoren ausgerichtet. Wählt man bei der dargestellten Verteilung der Mikroreaktoren auf dem Tablar (4) den Schütteldurchmesser gleich dem diagonalen Abstand der Mittelpunkte der Mikroreaktoren, so kreisen die 4 Mikroreaktoren während einer Umdrehung nacheinander über den Lichtstrahl (18) der Sensoroptik (17). Die Mikroreaktoren bewegen sich in der Reihenfolge I-IV über die Sensoroptik (17), wobei der während der Erfassung ortsfeste Lichtstrahl (18) eine Kreislinie (23) beschreibt. Die Sensorsignale, die von den einzelnen Mikroreaktoren hervorgerufen werden, werden mit dem hier nicht dargestellten Computer (8) aufgezeichnet. Im Rahmen der Auswertung der Sensorsignale erfolgt eine Zuordnung zwischen den Sensorsignalen und den Mikroreaktoren, von denen die für die Sensorsignale verantwortliche elektromagnetische Strahlung ausgeht. Die für die Zuordnung erforderliche Information über die Position des Mikroreaktors kann beispielsweise mittels eines an dem Rotationsschüttler (5,6) angeordneten Positionsgebers (z.B. einer Lichtschranke, eines Beschleunigungssensors oder eines Hallsensors) erfasst werden.

Umfasst die Mikrotiterplatte (1) mehr als die vier in Abb. 5 dargestellten Mikroreaktoren, wird die Sensoroptik (17) nach der Erfassung der Prozessparameter der ersten Gruppe von vier Mikroreaktoren von der Positioniereinheit (7) zu einer nächsten, benachbarten Gruppe übereinstimmend zueinander angeordneter Mikroreaktoren mit vier Mikroreaktoren verfahren. Eine Anstellungswinkel der Sensoroptik (17) mit einem Winkel (22) zwischen 25°-40° zu den Böden (10) der Mikroreaktoren erweist sich auch bei diesem Verfahren als vorteilhaft.

Mit dem prinzipiell an Hand von Abb. 5 erläuterten Verfahren ist es jedoch auch möglich die Prozessparameter einer höheren Anzahl (>4) von Mikroreaktoren je Gruppe zu erfassen. Der Schütteldurchmesser (27) ist dann so zu wählen, dass die Mikroreaktoren einen Kreis über die ortsfeste Sensoroptik beschreiben, bei dem während einer Umdrehung mehr als vier Mikroreaktoren nacheinander erfasst werden.

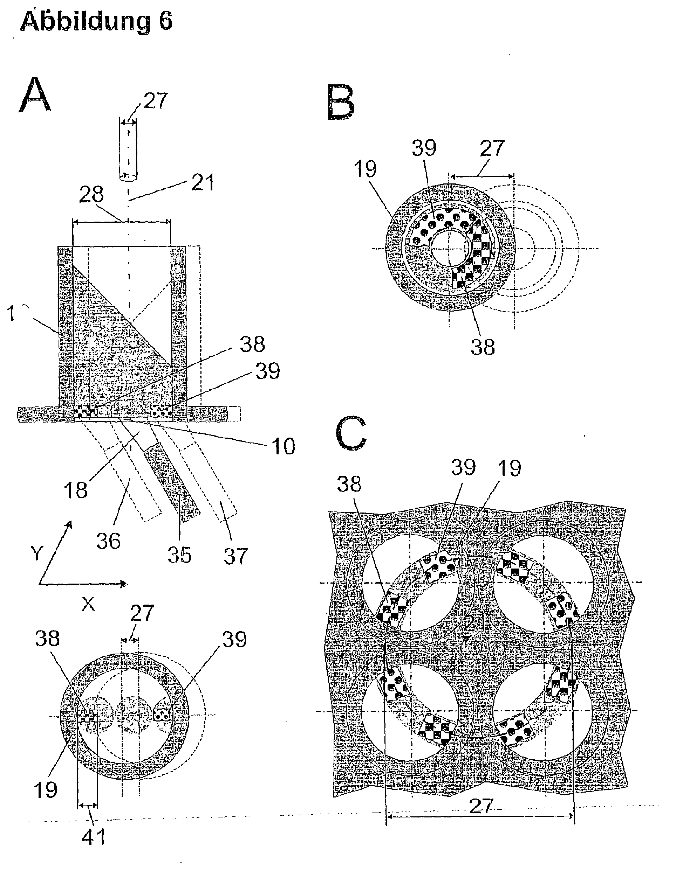

Zur Beschleunigung der Erfassung, ist es bei einem Verfahren nach Abb. 5 oder Abb. 6 C möglich, die Prozessparameter mehrerer Gruppen benachbart zueinander angeordneter Mikroreaktoren mit jeweils einer Sensoroptik für jede Gruppe parallel zu erfassen.

Erfindungsgemäß können die Reaktionsflüssigkeiten in den Mikroreaktoren wenigstens ein chemisches Sensormaterial aufweisen, das vorzugsweise an wenigstens einer Innenwand des Mikroreaktors, beispielsweise dem Boden (10) angebracht ist Derartige chemische Sensoren sind beispielsweise Fluoreszenz-Farbstoffe, die als Indikatoren von Prozessparametern wie pH, T, pO₂, und pCO₂ fungieren. In gelöster Form können die Fluoreszenz-Farbstoffe zur Bestimmung der Prozessparameter mit den anhand der Abbildungen 1-5 beschriebenen Vorrichtungen und Verfahren verwendet werden. Werden die Fluoreszenz-Farbstoffe an den Innenwänden als sensitive Schichten (38,39) immobilisiert, bedarf es einer speziellen Ausrichtung der Sensoroptik (17), wie sie beispielhaft in Abbildung 6 A-B für das Messverfahren nach Abb. 4 dargestellt ist.

Dabei können mehrere sensitive Schichten (38, 39) so am Boden (10) des Mikroreaktors angeordnet werden, dass unterschiedliche Prozessparameter erfasst werden können. Ein Ausschnitt des transparenten Bodens (10) wird frei gelassen, damit der Lichtstrahl (18) auch ungehindert in das Flüssigkeitsvolumen eintreten kann. Nach Abb. 6 A ist die Ausrichtung der Sensoroptik (17) und der Schütteldurchmesser (27) so zu bestimmen, dass der Lichtstrahl (18) bei einer Umdrehung des Tablars (4) stets auf die sensitive Schicht(38), (39) oder den Ausschnitt zwischen diesen trifft (Schütteldurchmesser (27) < [Reaktordurchmesser (28) (Anzahl der sensitiven Schichten (N)+1) - Länge einer sensitiven Schicht (41)]). Mit der Länge einer sensitiven Schicht ist hier, wie in 41 dargestellt, gemeint, das längste geometrische Abmaß eines sensitiven Schicht(38,39) Daraus folgt für die Erfassung der Messwerte, dass die Sensoroptik (17) mit Hilfe der XY-Positioniereinheit (7) unterschiedliche Positionen 35, 36 und 37 unterhalb des Bodens (10) des Mikroreaktors anfährt, um verschiedene Prozessparameter zu erfassen. Pos. 35 dient der Erfassung der Eigenfluoreszenz oder des Streulichts der Reaktionsflüssigkeit, während die Positionen 36, 37 der Erfassung der Abstrahlung von den unterschiedlichen sensitiven Schichten (38, 39) dienen.

In der Variante nach Abb. 6 B werden die unterschiedlichen Prozessparameter in einem Mikroreaktor erfasst, ohne die Position der Sensoroptik zwischen zwei Erfassungsvorgängen zu verändern. Hierbei trifft der Lichtstrahl (18) auf einer Kreisbahn nacheinander auf die am Boden immobilisierten sensitiven Schichten (38,39). Ein Teil der Bodenfläche ist frei, um eine direkte Einstrahlung in die Reaktionsflüssigkeit zu ermöglichen, die für die Erfassung bestimmter Prozessparameter erforderlich ist, wie z.B. die Streulicht-Intensität oder Eigen-Fluoreszenz der Reaktionsflüssigkeit. Die Zuordnung der unterschiedlichen Sensorsignale über die Rotation des Mikroreaktors erfolgt über einen nicht dargestellten Positionsgeber.

In der Variante nach Abb. 6 C sind die sensitiven Schichten (38,39) in den Mikroreaktoren so angebracht, dass mehrere Mikroreaktoren während einer Umdrehung des Tablars von dem Lichtstrahl (18) nacheinander erfasst werden. Die von der Sensoroptik (17) überstrichenen Fläche (40) erfasst vier Mikroreaktoren und unterschiedliche Prozessparameter, die nach der Erfassung der Signale den einzelnen Mikroreaktoren zugeordnet werden müssen. Dieses geschieht auch hier mit einem Positionsgeber. Umfasst das Mikroreaktorarray mehr als die vier dargestellten Mikroreaktoren, wird die Sensoroptik nach der Erfassung der Prozessparameter der ersten Gruppe von vier Mikroreaktoren von der Positioniereinheit (7) zu weiteren Gruppen benachbart zueinander angeordneter Mikroreaktoren mit jeweils vier Mikroreaktoren verfahren.

Beim Einsatz von Mikroreaktoren zur Kultivierung von Mikroorganismen weisen diese vorzugsweise eine obere Öffnung auf, die während des Betriebs mit einer gasdurchlässigen Abdeckung abgedeckt ist, beispielsweise in Form einer selbstklebenden Membran. Diese Membran erlaubt einen monoseptischen Betrieb der Mikroreaktoren. Die in der Reaktionsflüssigkeit ablaufende Reaktion wird mit der nötigen gasförmigen Reaktionskomponente versorgt, jedoch nicht durch gasförmige Reaktionsprodukte behindert.

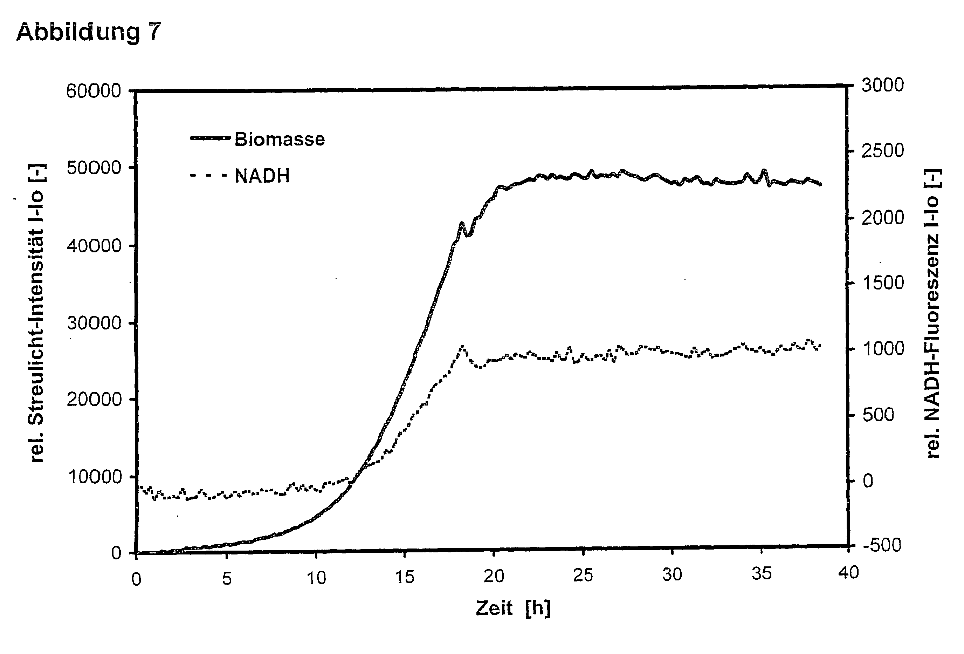

Als Beispiel einer Erfassung von Prozessparametern, die mit dem erfindungsgemäßen Verfahren ermittelt wurden, sind in Abbildung 7 Messkurven einer Kultur von *Hansenula polymorpha wt* in 2xYP-Medium (Yeast-Peptone) mit 10g/L Glycerin bei einer Temperatur von 27°C dargestellt. Beobachtet wurden die Prozessparameter relative Streulicht-Intensität (bei 620nm) und die relative NADH-Fluoreszenz (Anregung bei 340nm, Emission bei 460nm) der Kultur über die Dauer der Reaktion. Die Erfassung der einzelnen Prozessparameter wurde mit einem Y-Lichtwellenleiter bei einem Anstellwinkel von 30° und 1 mm Abstand vom Mikrotiterplattenboden durchgeführt. Die Schüttelfrequenz entsprach dabei 995 1/min und der Schütteldurchmesser (27) war 3 mm. Die Reaktion wurde mit einer konventionellen 48-Well Mikrotiterplatte (Greiner Bioone, Frickenhausen, Art.-Nr.: 677 102) und 600 µl Füllvolumen durchgeführt. Zur Abdeckung der 48-Well Mikrotiterplatte diente eine gasdurchlässige Klebefolie als Abdeckung(Abgene, Hamburg, Art.-Nr.: AB-0718).

### Bezugszeichenliste

| | |
|---|---|
| 1 | Mikrotiterplatte |
| 2 | Lichtwellenleiter |
| 3 | Lesegerät |
| 4 | Tablar |
| 5 | stehender Rotationsschüttler |
| 6 | hängender Rotationsschüttler |
| 7 | X-Y-Positioniereinheit |
| 8 | Computer |
| 9 | Schaltung |
| 10 | Boden |
| 11 | Ausschnitt |
| 12 | Strahlungsquelle |
| 13 | Filter |
| 14 | Filter |
| 15 | Sensor |
| 16 | Schüttelgestell |
| 17 | Sensoroptik |
| 18 | Lichtstrahl |
| 19 | Zylindermantel |
| 20 | - |
| 21 | Exzenter-Achse |
| 22 | Winkel der Sensoroptik |
| 23 | Kreislinie |
| 24 | - |
| 25 | Y-Lichtwellenleiter |
| 26 | Kabel |
| 27 | Schütteldurchmesser |
| 28 | Durchmesser Boden 10 |
| 29 | - |
| 30 | - |
| 31 | Kreislinie |
| 32 | Position der Lichtblitze |
| 33 | - |
| 34 | - |
| 35 | Position der Sensoroptik 17 |
| 36 | Position der Sensoroptik 17 |
| 37 | Position der Sensoroptik 17 |
| 38 | sensitive Schicht |
| 39 | sensitive Schicht |
| 40 | - |
| 41 | Länge der sensitiven Schicht 38 |

## Patentansprüche

1. Verfahren zur Erfassung von Prozessparametern von Reaktionsflüssigkeiten in mehreren Mikroreaktoren (10,19) einer Mikrotiterplatte, die zumindest bis zur Beendigung der Reaktion in sämtlichen Mikroreaktoren kontinuierlich mit einem Rotationsschüttler geschüttelt werden, wobei
(a) die Prozessparameter in den Mikroreaktoren während der Reaktion unter kontinuierlichem Schütteln erfasst werden,
(b) die Erfassung der Prozessparameter mit Hilfe einer Sensoroptik (17) erfolgt, die einen Sensor (15) und eine Strahlungsquelle (12) aufweist,
(c) die Prozessparameter in den einzelnen Mikroreaktoren (10, 19) nacheinander von der an einer Positioniereinheit (7) angeordneten Sensoroptik (17) erfasst werden,
(d) die elektromagnetische Strahlung von der Strahlungsquelle (12) nacheinander in die Reaktionsflüssigkeit der Mikroreaktoren der Mikrotiterplatte eingeleitet wird und der der Strahlungsquelle zugeordnete Sensor (15) von der Reaktionsflüssigkeit des Mikroreaktors ausgehende elektromagnetische Strahlung erfasst,
(e) die Sensoroptik (17) nach der Erfassung der Prozessparameter in einem der Mikroreaktoren von der Positioniereinheit (7) zu einem anderen Mikroreaktor verfahren wird,
**dadurch gekennzeichnet**
(f) **dass** die unter einem der Mikroreaktoren ausgerichtete Sensoroptik (17) zumindest während der Erfassung der Prozessparameter nicht bewegt wird, so dass die geschüttelten Mikroreaktoren (10, 19) sich relativ zu der Sensoroptik (17) bewegen,
(g) wobei der Schütteldurchmesser des Rotationsschüttlers kleiner als der Durchmesser des Bodens (10) der Mikroreaktoren gewählt wird, so dass die elektromagnetische Strahlung der Sensoroptik (17) während der Erfassung der Protzessparmeter in einem der Mikroreaktoren ausschließlich in diesen Mikroreaktor eingeleitet wird und die von jedem Mikroreaktor in Folge der eingeleiteten elektromagnetischen Strahlung ausgehende elektromagnetische Strahlung ausschließlich von dem der einleitenden Strahlungsquelle (12) zugeordneten Sensor (15) der Sensoroptik (17) erfasst wird.

2. Verfahren zur Erfassung von Prozessparametern von Reaktionsflüssigkeiten in mehreren Mikroreaktoren (10,19) einer Mikrotiterplatte, die zumindest bis zur Beendigung der Reaktion in sämtlichen Mikroreaktoren kontinuierlich mit einem Rotationsschüttler geschüttelt werden, wobei
(a) die Prozessparameter in den Mikroreaktoren während der Reaktion unter kontinuierlichem Schütteln erfasst werden,
(b) die Erfassung der Prozessparmeter mit Hilfe mehrerer Sensoroptiken (17)erfolgt, die jeweils einen Sensor (15) und eine Strahlungsquelle (12) aufweisen,
(c) die Prozessparameter in mehreren Mikroreaktoren (10, 19) mit mehreren Sensoroptiken (17) gleichzeitig erfasst werden und
(d) die elektromagnetische Strahlung von jeder Strahlungsquelle (12) nacheinander in die Reaktionsflüssigkeit der Mikroreaktoren der Mikrotiterplatte eingeleitet wird und der der Strahlungsquelle zugeordnete Sensor (15) von der Reaktionsflüssigkeit des Mikroreaktors ausgehende elektromagnetische Strahlung erfasst,
**dadurch gekenntzeichnet**
(e) **dass** jede unter den Mikroreaktoren (10,19) ausgerichtete Sensoroptik (17) zumindest während der Erfassung der Prozessparameter nicht bewegt wird, so dass die geschüttelten Mikroreaktoren (10, 19) sich relativ zu jeder Sensoroptik bewegen,
(f) wobei der Schütteldurchmesser des Rotationsschüttlers kleiner als der Durchmesser des Bodens (10) der Mikroreaktoren gewählt wird, so dass die elektromagnetische Strahlung jeder Sensoroptik (17) während der Erfassung der Prozessparameter ausschließlich in den Mikroreaktor eingeleitet wird, unter dem sich die Sensoroptik gerade befindet und die von jedem Mikroreaktor in Folge der eingeleiteten elektromagnetischen Strahlung ausgehende elektromagnetische Strahlung ausschließlich von dem der einleitenden Strahlungsquelle (12) zugeordneten Sensor (15) der Sensoroptik (17) erfasst wird.

3. Verfahren nach Anspruch 2, **dadurch gekennzeichnet dass**
- ein Mikroreaktorarray (1) mehrere Gruppen von Mikroreaktoren (10, 19) aufweist,
- wobei die Prozessparameter der Gruppen nacheinander erfasst werden, während die Prozessparameter in den Mikroreaktoren einer Gruppe gleichzeitig von einer Sensoroptik (17) für jeden Mikroreaktor der Gruppe erfasst werden
- und die an einer Positioniereinheit (17) angeordneten Sensoroptiken nach der gleichzeitigen Erfassung der Prozessparameter in den Mikroreaktoren einer Gruppe von der Positioniereinheit zu einer anderen Gruppe verfahren werden.

4. Verfahren zur Erfassung von Prozessparametern von Reaktionsflüssigkeiten in mehreren Mikroreaktoren (10,19) einer Mikrotiterplatte, die zumindest bis zur Beendigung der Reaktion in sämtlichen Mikroreaktoren kontinuierlich mit einem Rotationsschüttler geschüttelt werden, wobei
(a) die Prozessparameter in den Mikroreaktoren während der Reaktion unter kontinuierlichem Schütteln mit Hilfe mindestens einer Sensoroptik (17) erfasst werden, die jeweils einen Sensor (15) und eine Strahlungsquelle (12) aufweist,
(b) die elektromagnetische Strahlung von der Strahlungsquelle (12) nacheinander in die Reaktionsflüssigkeit der Mikroreaktoren eingeleitet wird und der der Strahlungsquelle zugeordnete Sensor (15) von der Reaktionsflüssigkeit des Mikroreaktors ausgehende elektromagnetische Strahlung erfasst,
**dadurch gekennzeichnet, dass**
(c) jede unter einem der Mikroreaktoren ausgerichtete Sensoroptik (17) zumindest während der Erfassung der Prozessparameter nicht bewegt wird, so dass die geschüttelten Mikroreaktoren (10, 19) sich relativ zu jeder Sensoroptik bewegen,
(d) die Prozessparameter mindestens einer Gruppe benachbart zueinander angeordneter Mikroreaktoren aufgrund deren Relativbewegung (23) zu der nicht bewegten Sensoroptik (17) nacheinander von dieser Sensoroptik erfasst werden,
(e) wobei der Schütteldurchmesser (27) des Rotationsschüttlers so abgestimmt ist, dass die Mikroreaktoren (10,19) jeder Gruppe während einer Umdrehung des Rotationsschüttlers nacheinander über der Sensoroptik (17) kreisen und wobei die von jedem Mikroreaktor in Folge der eingeleiteten elektromagnetischen Strahlung ausgehende elektromagnetische Strahlung ausschließlich von dem der einleitenden Strahlungsquelle (12) zugeordneten Sensor (15) der Sensoroptik (17) erfasst wird,
(f) im Rahmen einer Auswertung der Sensorsignale eine Zuordnung zwischen den Sensorsignalen und den Mikroreaktoren (10, 19) erfolgt, von denen die elektromagnetische Strahlung ausgeht und
(g) die Sensoroptik (17) nach der Erfassung der Prozessparameter einer Gruppe (I - IV) von Mikroreaktoren gegebenenfalls von einer Positioniereinheit (7) zu weiteren Gruppen (I- IV) benachbart zueinander angeordneten Mikroreaktoren (10, 19)verfahren wird.

5. Verfahren nach Anspruch 4, **dadurch gekennzeichnet, dass** die Prozessparameter mehrerer Gruppen benachbart zueinander angeordneter Mikroreaktoren mit jeweils einer Sensoroptik für jede Gruppe parallel erfasst werden.

6. Verfahren nach einem der Ansprüche 1 bis 5, **dadurch gekennzeichnet, dass** als Strahlungsquelle (12) der Sensoroptik (17) eine Blitzlampe verwendet wird, deren Pulsfrequenz auf die Schüttelbewegung (27) derart abgestimmt wird, dass die Lichtblitze an mindestens vier unterschiedlichen Stellen (32) auf den Mikroreaktor (10, 19) treffen.

7. Verfahren nach einem der Ansprüche 1 bis 5, **dadurch gekennzeichnet, dass** als Strahlungsquelle (12) der Sensoroptik (17) eine Blitzlampe verwendet wird, deren Pulsfrequenz auf die Schüttelbewegung (27) derart abgestimmt wird, dass die Lichtblitze während der Schüttelbewegung stets an derselben Stelle auf den Mikroreaktor (10, 19) treffen.

8. Verfahren nach einem der Ansprüche 1 bis 7, **dadurch gekennzeichnet, dass** die elektromagnetische Strahlung jeder Strahlungsquelle (12) und/oder die von den Reaktionsflüssigkeiten ausgehende Strahlung über Lichtwellenleiter (2, 25) geführt wird.

9. Verfahren nach einem der Ansprüche 1 bis 8, **dadurch gekennzeichet, dass** jede Sensoroptik (17) derart zu jedem Mikroreaktor (10, 19) ausgerichtet wird, dass keine von den Wänden des Mikroreaktors reflektierte elektromagnetische Strahlung auf den Sensor (15) trifft.

10. Verfahren nach einem der Ansprüche 1 bis 9, **dadurch gekennzeichnet, dass** die Reaktionsflüssigkeiten in den Mikroreaktoren wenigstens ein chemisches Sensormaterial aufweisen.

11. Verfahren nach Anspruch 10, **dadurch gekennzeichnet, dass** das chemische Sensormaterial (38, 39) an wenigstens einer Innenfläche (10) des Mikroreaktors angebracht ist.

12. Vorrichtung zur Durchführung des Verfahrens nach einem der Ansprüche 1 bis 3, mit
- einer mit einer Schütteleinrichtung (5, 6) verbundenen Mikroreaktor-Plattform (4) mit mindestens zwei Mikroreaktoren (10, 19), die zumindest teilweise durchlässig für elektromagnetische Strahlung sind,
- mindestens einer von der Schüttelbewegung (27) der Mikroreaktor-Plattform (4) entkoppelten Sensoroptik (17), die jeweils einen Sensor (15) und eine Strahlungsquelle (12) aufweist, wobei die Strahlungsquelle (12) elektromagnetische Strahlung in die Reaktionsflüssigkeit der Mikroreaktoren einleitet und der der Strahlungsquelle zugeordnete Sensor (15) von der Reaktionsflüssigkeit der Mikroreaktoren ausgehende elektromagnetische Strahlung erfasst sowie
- einer Datenverarbeitungseinheit (8, 9) zur Erfassung und Auswertung der Sensorsignale, **dadurch gekennzeichnet, dass**
- jede Sensoroptik (17) an einer Positioniereinheit (7) befestigt ist, die gegenüber der Mikroreaktor-Plattform (4) ortsfest gelagert ist,
- die ebene Mikroreaktor-Plattform (4) im Bereich der Bodenflächen (10) der Mikroreaktoren (10, 19) zumindest teilweise durchlässig für elektromagnetische Strahlung ist,
- jede Sensoroptik (17) mittels der Positioniereinheit (7) unter die Bodenflächen (10) der Mikroreaktoren verfahrbar ist,
- die Schüttelvorrichtung (5,6) ein Rotations-Schüttler ist,
- dessen Schütteldurchmesser kleiner als der Durchmesser (28) des Bodens der Mikroreaktoren (10,19) ist und
- die ebene Mikroreaktor-Plattform (4) ein Tablar mit einer Aufnahme ist, in die eine Mikrotiterplatte (1) eingesetzt ist.

13. Vorrichtung zur Durchführung des Verfahrens nach einem der Anspruch 4 oder 5, mit
- einer mit einer Schütteleinrichtung (5, 6) verbundenen Mikroreaktor-Plattform (4) mit mindestens zwei Mikroreaktoren (10, 19), die zumindest teilweise durchlässig für elektromagnetische Strahlung sind,
- mindestens einer von der Schüttelbewegung (27) der Mikroreaktor-Plattform (4) entkoppelten Sensoroptik (17), die jeweils einen Sensor (15) und eine Strahlungsquelle (12) aufweist, wobei die Strahlungsquelle (12) elektromagnetische Strahlung in die Reaktionsflüssigkeit der Mikroreaktoren einleitet und der der Strahlungsquelle zugeordnete Sensor (15) von der Reaktionsflüssigkeit der Mikroreaktoren ausgehende elektromagnetische Strahlung erfasst sowie
- einer Datenverarbeitungseinheit (8, 9) zur Erfassung und Auswertung der Sensorsignale, **dadurch gekennzeichnet, dass**
- jede Sensoroptik (17) an einer Positioniereinheit (7) befestigt ist, die gegenüber der Mikroreaktor-Plattform (4) ortsfest gelagert ist,
- die ebene Mikroreaktor-Plattform (4) im Bereich der Bodenflächen (10) der Mikroreaktoren (10, 19) zumindest teilweise durchlässig für elektromagnetische Strahlung ist,
- jede Sensoroptik (17) mittels der Positioniereinheit (7) unter die Bodenflächen (10) der Mikroreaktoren verfahrbar ist,
- die Schüttelvorrichtung (5,6) ein Rotationsschüttler ist,
- dessen Schütteldurchmesser so abgestimmt ist, dass mehrere Mikroreaktoren (10,19) während einer Umdrehung des Rotationsschüttlers nacheinander über der Sensoroptik (17) kreisen,
- die ebene Mikroreaktor-Plattform (4) ein Tablar mit einer Aufnahme ist, in die eine Mikrotiterplatte (1) eingesetzt ist.

## Claims

1. A method for recording process parameters of reaction liquids in a plurality of microreactors (10, 19) of a microtitre plate, which are continuously shaken at least until the end of the reaction in all of the microreactors by means of a rotation shaker, wherein
(a) the process parameters in the microreactors are recorded during the reaction whilst shaking continuously,
(b) the process parameters are recorded with the aid of a sensor optics device (17) comprising a sensor (15) and a radiation source (12),
(c) the process parameters in the individual microreactors (10, 19) are recorded successively by a sensor optics device (17) disposed on a positioning unit (7),
(d) the electromagnetic radiation from the radiation source (12) is successively introduced into the reaction liquid of the microreactors of the microtitre plate and the sensor (15) associated with the radiation source records the electromagnetic radiation emanating from the reaction liquid of the microreactor,
(e) after recording the process parameters in one of the microreactors, the sensor optics device (17) is moved by the positioning unit (7) to another microreactor,
**characterised in**
(f) **that** the sensor optics device (17) aligned under one of the microreactors is not moved at least during the recording of the process parameters so that shaken microreactors (10, 19) move relative to the sensor optics device (17),
(g) wherein the shaking diameter of the rotation shaker is selected to be smaller than the diameter of the bottom (10) of the microreactors so that during the recording of the process parameters in one of the microreactors the electromagnetic radiation of the sensor optics device (17) is introduced exclusively into this microreactor and the electromagnetic radiation emanating from each microreactor following the introduced electromagnetic radiation is exclusively recorded by the sensor (15) of the sensor optics device (17) associated with the introducing radiation source (12).

2. The method for recording process parameters of reaction liquids in a plurality of microreactors (10, 19) of a microtitre plate, which are continuously shaken at least until the end of the reaction in all of the microreactors by means of a rotation shaker, wherein
(a) the process parameters in the microreactors are recorded during the reaction whilst shaking continuously,
(b) the process parameters are recorded with the aid of a plurality of sensor optics devices (17) each comprising a sensor (15) and a radiation source (12),
(c) the process parameters in the plurality of microreactors (10, 19) are recorded simultaneously by a plurality of sensor optics devices (17) and
(d) the electromagnetic radiation from each radiation source (12) is successively introduced into the reaction liquid of the microreactors of the microtitre plate and the sensor (15) associated with the radiation source records the electromagnetic radiation emanating from the reaction liquid of the microreactor,
**characterised in**
(e) **that** each sensor optics device (17) aligned under one of the microreactors (10, 19) is not moved at least during the recording of the process parameters so that shaken microreactors (10, 19) move relative to each sensor optics device,
(f) wherein the shaking diameter of the rotation shaker is selected to be smaller than the diameter of the bottom (10) of the microreactors so that during the recording of the process parameters in one of the microreactors the electromagnetic radiation of each sensor optics device (17) is introduced exclusively into the microreactor below which the sensor optics device is specifically located and the electromagnetic radiation emanating from each microreactor following the introduced electromagnetic radiation is exclusively recorded by the sensor (15) of the sensor optics device (17) associated with the introducing radiation source (12).

3. The method according to claim 2, **characterised in that**
- a microreactor array (1) comprises a plurality of groups of microreactors (10, 19),
- wherein the process parameters of the groups are recorded successively whilst the process parameters in the microreactors of one group are recorded simultaneously by a sensor optics device (17) for each microreactor in the group
- and after the simultaneous recording of the process parameters in the microreactors of one group, the sensor optics devices (17) disposed on a positioning unit (7) are moved by the positioning unit to another group.

4. The method for recording process parameters of reaction liquids in a plurality of microreactors (10, 19) of a microtitre plate, which are continuously shaken at least until the end of the reaction in all of the microreactors by means of a rotation shaker, wherein
(a) the process parameters in the microreactors are recorded during the reaction whilst shaking continuously with the aid of at least one sensor optics device (17) each comprising a sensor (15) and a radiation source (12),
(b) the electromagnetic radiation from the radiation source (12) is successively introduced into the reaction liquid of the microreactors and the sensor (15) associated with the radiation source records the electromagnetic radiation emanating from the reaction liquid of the microreactor,
**characterised in that**
(c) each sensor optics device (17) aligned under one of the microreactors is not moved at least during the recording of the process parameters so that the shaken microreactors (10, 19) move relative to each sensor optics device,
(d) the process parameters of at least one group of adjacently disposed microreactors are successively recorded by this sensor optics system as a result of their relative movement (23) to the sensor optics device (17) which is not moved,
(e) wherein the shaking diameter (27) of the rotation shaker is tuned so that the microreactors (10, 19) of each group successively circle over the sensor optics device (17) during a revolution of the rotation shaker and wherein the electromagnetic radiation emanating from each microreactor following the introduced electromagnetic radiation is exclusively recorded by the sensor (15) of the sensor optics device (17) associated with the introducing radiation source (12),
(f) within the scope of an evaluation of the sensor signals, an assignment is made between the sensor signals and the microreactors (10, 19) from which the electromagnetic radiation emanates and
(g) after recording the process parameters of one group (I-IV) of microreactors, the sensor optics device (17) is optionally moved by a positioning unit (7) to further groups (I-IV) of adjacently disposed microreactors (10, 19).

5. The method according to claim 4, **characterised in that** the process parameters of a plurality of groups of adjacently disposed microreactors are recorded in parallel by means of respectively one sensor optics device for each group.

6. The method according to any one of claims 1 to 5, **characterised in that** a flashlamp is used as the radiation source (12) of the sensor optics device (17), its pulse frequency being matched to the shaking movement (27) in such a manner that the light flashes are incident on the microreactor (10, 19) at at least four different points (32).

7. The method according to any one of claims 1 to 5, **characterised in that** a flashlamp is used as the radiation source (12) of the sensor optics device (17), its pulse frequency being matched to the shaking movement (27) in such a manner that the light flashes are always incident on the microreactor (10, 19) at the same point.

8. The method according to any one of claims 1 to 7, **characterised in that** the electromagnetic radiation of each radiation source (12) and/or the radiation emanating from the reaction liquid is guided via optical waveguides (2, 25).

9. The method according to any one of claims 1 to 8, **characterised in that** each sensor optics device (17) is aligned with respect to each microreactor (10, 19) in such a manner that none of the electromagnetic radiation which is reflected from the walls of the microreactor is incident on the sensor (15).

10. The method according to any one of claims 1 to 9, **characterised in that** the reaction liquids in the microreactors have at least one chemical sensor material.

11. The method according to claim 10, **characterised in that** the chemical sensor material (38, 39) is applied to at least one inner surface (10) of the microreactor.

12. An apparatus for carrying out the method according to any one of claims 1 to 3, comprising:
- a microreactor platform (4) connected to a shaking device (5, 6), having at least two microreactors (10, 19) which are at least partially transparent to electromagnetic radiation,
- at least one sensor optics device (17) decoupled from the shaking movement (27) of the microreactor platform (4), each comprising a sensor (15) and a radiation source (12), wherein the radiation source (12) introduces electromagnetic radiation into the reaction liquid of the microreactors and the sensor (15) which is associated with said radiation source detects electromagnetic radiation emanating from said reaction liquid of said microreactors, as well as
- a data processing unit (8, 9) for recording and evaluating the sensor signals,
**characterised in that**
- each sensor optics device (17) is fastened to a positioning unit (7) which is mounted in a fixed position with respect to the microreactor platform (4),
- said planar microreactor platform (4) is at least partially transparent to electromagnetic radiation in the area of bottom surfaces (10) of said microreactors (10, 19),
- each sensor optics device (17) can be moved by means of the positioning unit (7) under the bottom surfaces (10) of the microreactors,
- the shaking device (5, 6) is a rotation shaker,
- whose shaking diameter is smaller than the diameter (28) of the bottom of the microreactors (10, 19) and
- the planar microreactor platform (4) is a tray having a receptacle into which a microtitre plate (1) is inserted.

13. The apparatus for carrying out the method according to any one of claims 4 or 5, comprising:
- a microreactor platform (4) connected to a shaking device (5, 6), having at least two microreactors (10, 19) which are at least partially transparent to electromagnetic radiation,
- at least one sensor optics device (17) decoupled from the shaking movement (27) of the microreactor platform (4), each comprising a sensor (15) and a radiation source (12), wherein the radiation source (12) introduces electromagnetic radiation into the reaction liquid of the microreactors and the sensor (15) which is associated with said radiation source detects electromagnetic radiation emanating from said reaction liquid of said microreactors, as well as
- a data processing unit (8, 9) for recording and evaluating the sensor signals,
**characterised in that**
- each sensor optics device (17) is fastened to a positioning unit (7) which is mounted in a fixed position with respect to the microreactor platform (4),
- said planar microreactor platform (4) is at least partially transparent to electromagnetic radiation in the area of bottom surfaces (10) of said microreactors (10, 19),
- each sensor optics device (17) can be moved by means of the positioning unit (7) under the bottom surfaces (10) of the microreactors,
- the shaking device (5, 6) is a rotation shaker,
- whose shaking diameter is tuned such that a plurality of microreactors (10, 19) successively circle over the sensor optics device (17) during a revolution of the rotation shaker,
- the planar microreactor platform (4) is a tray having a receptacle into which a microtitre plate (1) is inserted.

## Revendications

1. Méthode d'acquisition de paramètres de procédé de liquides de réaction dans plusieurs microréacteurs (10, 19) d'une plaque de microtitrage qui sont agités en permanence au moyen d'un agitateur à rotation au moins jusqu'à la fin de la réaction dans tous les microréacteurs,
(a) les paramètres du procédé dans les microréacteurs étant relevés pendant la réaction sous agitation permanente,
(b) l'acquisition des paramètres du procédé étant réalisée au moyen d'un système de capteur optique (17) pourvu d'un capteur (15) et d'une source de rayonnement (12),
(c) les paramètres du procédé dans les différents microréacteurs (10, 19) étant relevés successivement par un système de capteur optique (17) disposé sur une unité de positionnement (7),
(d) le rayonnement électromagnétique émis par la source de rayonnement (12) étant introduit successivement dans le liquide de réaction des microréacteurs de la plaque de microtitrage et le capteur (15) associé à la source de rayonnement relevant le rayonnement électromagnétique émis par le liquide de réaction du microréacteur,
(e) le système de capteur optique (17) étant déplacé, après l'acquisition des paramètres du procédé dans un microréacteur, jusqu'à un autre microréacteur par l'unité de positionnement (7),
**caractérisée en ce que**
(f) le système de capteur optique (17) aligné sous l'un des microréacteurs reste immobile au moins pendant l'acquisition des paramètres du procédé, de sorte que les microréacteurs (10, 19) agités se déplacent par rapport au système de capteur optique (17),
(g) le diamètre d'agitation de l'agitateur à rotation étant choisi de sorte à être inférieur au diamètre du fond (10) du microréacteur, afin que, pendant l'acquisition des paramètres du procédé dans un microréacteur, le rayonnement électromagnétique du système de capteur optique (17) ne soit introduit exclusivement que dans ce microréacteur et que le rayonnement électromagnétique émis par chaque microréacteur du fait du rayonnement électromagnétique introduit dans celui-ci ne soit relevé exclusivement que par le capteur (15) du système de capteur optique (17) associé à la source de rayonnement (12) ayant émis le rayonnement

2. Méthode d'acquisition de paramètres de procédé de liquides de réaction dans plusieurs microréacteurs (10, 19) d'une plaque de microtitrage qui sont agités en permanence au moyen d'un agitateur à rotation au moins jusqu'à la fin de la réaction dans tous les microréacteurs,
(a) les paramètres du procédé dans les microréacteurs étant relevés pendant la réaction sous agitation permanente,
(b) l'acquisition des paramètres du procédé étant réalisée au moyen de plusieurs systèmes de capteurs optiques (17) pourvus chacun d'un capteur (15) et d'une source de rayonnement (12),
(c) les paramètres du procédé dans plusieurs microréacteurs (10, 19) étant relevés simultanément par plusieurs systèmes de capteurs optiques (17), et
(d) le rayonnement électromagnétique émis par chaque source de rayonnement (12) étant introduit successivement dans le liquide de réaction des microréacteurs de la plaque de microtitrage et le capteur (15) associé à la source de rayonnement relevant le rayonnement électromagnétique émis par le liquide de réaction du microréacteur,
**caractérisée en ce que**
(e) chaque système de capteur optique (17) aligné sous les microréacteurs (10, 19) reste immobile au moins pendant l'acquisition des paramètres du procédé, de sorte que les microréacteurs (10, 19) agités se déplacent par rapport à chaque système de capteur optique,
(f) le diamètre d'agitation de l'agitateur à rotation étant choisi de sorte à être inférieur au diamètre du fond (10) du microréacteur, afin que, pendant l'acquisition des paramètres du procédé, le rayonnement électromagnétique de chaque système de capteur optique (17) ne soit introduit exclusivement que dans le microréacteur sous lequel le système de capteur est positionné à ce moment, et que le rayonnement électromagnétique émis par chaque microréacteur du fait du rayonnement électromagnétique introduit dans celui-ci ne soit relevé exclusivement que par le capteur (15) du système de capteur optique (17) associé à la source de rayonnement (12) ayant émis le rayonnement.

3. Méthode selon la revendication 2, **caractérisée en ce que**
- un ensemble de microréacteurs (1) est pourvu de plusieurs groupes de microréacteurs (10, 19),
- les paramètres de procédé des groupes étant relevés successivement, alors que les paramètres de procédé dans les microréacteurs d'un groupe sont relevés simultanément au moyen d'un système de capteur optique (17) pour chaque microréacteur du groupe
- et les systèmes de capteurs optiques (17) disposés sur l'unité de positionnement (7) sont déplacés par l'unité de positionnement à un autre groupe après l'acquisition simultanée des paramètres du procédé dans les microréacteurs d'un groupe.

4. Méthode d'acquisition de paramètres de procédé de liquides de réaction dans plusieurs microréacteurs (10, 19) d'une plaque de microtitrage qui sont agités en permanence au moyen d'un agitateur à rotation au moins jusqu'à la fin de la réaction dans tous les microréacteurs,
(a) les paramètres du procédé dans les microréacteurs étant relevés pendant la réaction sous agitation permanente au moyen d'au moins un système de capteur optique (17) pourvu respectivement d'un capteur (15) et d'une source de rayonnement (12),
(b) le rayonnement électromagnétique émis par la source de rayonnement (12) étant introduit successivement dans le liquide de réaction des microréacteurs et le capteur (15) associé à la source de rayonnement relevant le rayonnement électromagnétique émis par le liquide de réaction du microréacteur,
**caractérisée en ce que**
(c) chaque système de capteur optique (17) aligné sous l'un des microréacteurs reste immobile au moins pendant l'acquisition des paramètres du procédé, de sorte que les microréacteurs (10, 19) agités se déplacent par rapport à chaque système de capteur optique,
(d) les paramètres de procédé d'au moins un groupe de microréacteurs adjacents les uns aux autres sont relevés successivement par le système de capteur optique (17) du fait de leur déplacement relatif (23) par rapport à ce système de capteur optique,
(e) le diamètre d'agitation (27) de l'agitateur à rotation étant choisi de sorte que les microréacteurs (10, 19) de chaque groupe passent successivement en cercle au-dessus du système de capteur optique (17) pendant une rotation de l'agitateur à rotation et que chaque rayonnement électromagnétique émis par chaque microréacteur du fait du rayonnement électromagnétique introduit dans celui-ci ne soit relevé exclusivement que par le capteur (15) du système de capteur optique (17) associé à la source de rayonnement (12) ayant émis le rayonnement.
(f) une corrélation est établie à des fins d'exploitation entre les signaux des capteurs et les microréacteurs (10, 19) ayant émis le rayonnement électromagnétique et
(g) le système de capteur optique (17) est le cas échéant déplacé par une unité de positionnement (7), après l'acquisition des paramètres du procédé d'un groupe (I - IV) de microréacteurs, jusqu'à d'autre groupes (I - IV) de microréacteurs (10, 19) disposés de manière adjacente les uns aux autres.

5. Méthode selon la revendication 4, **caractérisée en ce que** les paramètres du procédé de plusieurs groupes de microréacteurs disposés de manière adjacente les uns aux autres sont relevés en parallèle au moyen d'un système de capteur optique pour chaque groupe.

6. Méthode selon l'une des revendications 1 à 5, **caractérisée en ce que** la source de rayonnement (12) du système de capteur optique (17) est une lampe-éclair dont la fréquence d'impulsions est ajustée au mouvement d'agitation (27) de sorte que les éclairs lumineux frappent le microréacteur (10, 19) au moins en quatre endroits (32) différents.

7. Méthode selon l'une des revendications 1 à 5, **caractérisée en ce que** la source de rayonnement (12) du système de capteur optique (17) est une lampe-éclair dont la fréquence d'impulsions est ajustée au mouvement d'agitation (27) de sorte que les éclairs lumineux frappent le microréacteur (10, 19) toujours au même endroit pendant le mouvement d'agitation.

8. Méthode selon l'une des revendications 1 à 7, **caractérisée en ce que** le rayonnement électromagnétique de chaque source de rayonnement (12) et/ou le rayonnement émis par les liquides de réaction sont guidés par des fibres optiques (2, 25).

9. Méthode selon l'une des revendications 1 à 8, **caractérisée en ce que** chaque système de capteur optique (17) est orienté par rapport à chaque microréacteur (10, 19) de sorte qu'aucun rayonnement électromagnétique réfléchi par les parois du microréacteur ne frappe le capteur (15).

10. Méthode selon l'une des revendications 1 à 9, **caractérisée en ce que** les liquides de réaction dans les microréacteurs comportent au moins une substance chimique sensible faisant office de détecteur.

11. Méthode selon la revendication 10, **caractérisée en ce que** la substance chimique sensible faisant office de détecteur (38, 39) est disposée sur au moins une surface intérieure (10) du microréacteur.

12. Dispositif pour la réalisation de la méthode selon l'une des revendications 1 à 3, avec
- une plateforme de microréacteurs (4) reliée à un dispositif d'agitation (5, 6), avec au moins deux microréacteurs (10, 19) au moins partiellement transparents au rayonnement électromagnétique,
- au moins un système de capteur optique (17) découplé du mouvement d'agitation (27) de la plateforme de microréacteurs (4), muni respectivement d'un capteur (15) et d'une source de rayonnement (12), la source de rayonnement (12) introduisant un rayonnement électromagnétique dans le liquide de réaction des microréacteurs et le capteur (15) associé à la source de rayonnement relevant le rayonnement électromagnétique émis par le liquide de réaction des microréacteurs, ainsi que
- une unité de retraitement des données (8, 9) pour l'acquisition et l'exploitation des signaux des capteurs,
**caractérisé en ce que**
- chaque système de capteur optique (17) est fixé à une unité de positionnement (7) qui est disposée de manière fixe par rapport à la plateforme de microréacteurs (4),
- la plateforme de microréacteurs (4) plane est au moins partiellement transparente au rayonnement électromagnétique dans la zone des fonds (10) des microréacteurs (10, 19),
- chaque système de capteur optique (17) peut être déplacé sous les fonds (10) des microréacteurs au moyen de l'unité de positionnement (7),
- le dispositif d'agitation (5, 6) est un agitateur à rotation,
- dont le diamètre d'agitation est inférieur au diamètre (28) du fond des microréacteurs (10, 19) et
- la plateforme de microréacteurs (4) plane est une tablette avec un logement dans lequel est insérée une plaque de microtitrage (1).

13. Dispositif pour la réalisation de la méthode selon l'une des revendications 4 ou 5, avec
- une plateforme de microréacteurs (4) reliée à un dispositif d'agitation (5, 6), avec au moins deux microréacteurs (10, 19) au moins partiellement transparents au rayonnement électromagnétique,
- au moins un système de capteur optique (17) découplé du mouvement d'agitation (27) de la plateforme de microréacteurs (4), muni respectivement d'un capteur (15) et d'une source de rayonnement (12), la source de rayonnement (12) introduisant un rayonnement électromagnétique dans le liquide de réaction des microréacteurs et le capteur (15) associé à la source de rayonnement relevant le rayonnement électromagnétique émis par le liquide de réaction des microréacteurs, ainsi que
- une unité de retraitement des données (8, 9) pour l'acquisition et l'exploitation des signaux des capteurs,
**caractérisé en ce que**
- chaque système de capteur optique (17) est fixé à une unité de positionnement (7) qui est disposée de manière fixe par rapport à la plateforme de microréacteurs (4),
- la plateforme de microréacteurs (4) plane est au moins partiellement transparente au rayonnement électromagnétique dans la zone des fonds (10) des microréacteurs (10, 19),
- chaque système de capteur optique (17) peut être déplacé sous les fonds (10) des microréacteurs au moyen de l'unité de positionnement (7),
- le dispositif d'agitation (5, 6) est un agitateur à rotation,
- dont le diamètre d'agitation est choisi de sorte que plusieurs microréacteurs (10, 19) passent successivement en cercle au-dessus du système de capteur optique (17) pendant une rotation de l'agitateur à rotation
- la plateforme de microréacteurs (4) plane est une tablette avec un logement dans lequel est insérée une plaque de microtitrage (1).
